# EUROPÄISCHE PATENTSCHRIFT

(11) **EP 1 734 628 B1**
(45) Veröffentlichungstag und Bekanntmachung des Hinweises auf die Patenterteilung: **29.06.2011**
(21) Anmeldenummer: 06017137.8
(22) Anmeldetag: 14.12.2001
(51) Int. Cl.: H02G 3/22, H02G 3/06, G01N 27/407

(54) **Kabeldurchführung**
Cable feedthrough
Traversée de câble

(30) Priorität: 06.02.2001 DE 10105544
(43) Veröffentlichungstag der Anmeldung: 20.12.2006
(62) Teilanmeldung aus: 01990567.8
(73) Patentinhaber: Endress + Hauser GmbH + Co. KG, 79689 Maulburg (DE)
(72) Erfinder: Gutmann, Frank, 79112 Freiburg (DE); Alznauer, Miroslaw, 79697 Wies (DE)
(74) Vertreter: Andres, Angelika Maria

(56) Entgegenhaltungen:
- DE-A1- 2 334 398
- US-A- 4 668 477

## Beschreibung

Die Erfindung betrifft eine Kabeldurchführung für eine Meßsonde.

Meßsonden, z.B. Druckmeßsonden, werden häufig eingesetzt, indem sie z.B. an einem Kabel in einen Behälter eingebracht werden. Das Kabel dient dabei dem elektrischen Anschluß der Meßsonde und deren mechanischer Befestigung. Besonders geeignet sind hierfür Kabel, die außen eine z.B. von einem Kunststoff umgebene metallische Abschirmung aufweisen. Versorgungs- und/oder Signalleitungen können dann im Inneren der Abschirmung von äußeren Einflüssen geschützt zur Sonde führen.

Das Kabel führt von der Sonde aus dem Behälter heraus zu einer übergeordneten Einheit, z. B. einer Energieversorgung und/oder einer weiterführenden Elektronik.

Eine Anwendung ist die Füllstandsmessung mittels einer Druckmeßsonde. Dabei wird die Druckmeßsonde an dem Kabel in einen mit einem Füllgut gefüllten Behälter eingeführt. Der von der Druckmeßsonde ermittelte Druck entspricht der Höhe der Füllgutsäule oberhalb der Druckmeßsonde und ist daher ein Maß für den Füllstand in dem Behälter.

Bei diesen Anwendungen ist zur Abdichtung, z.B. damit kein Füllgut austritt oder in eine nachfolgende Elektronik und/oder übergeordnete Einheit eindringt, eine Kabeldurchführung erforderlich, die ein Gehäuse aufweist, durch das das Kabel hindurch geführt wird. Das Gehäuse kann dabei Bestandteil der übergeordneten Einheit sein, und/oder auch Teil einer Befestigungsvorrichtung für die Sonde sein, indem das Gehäuse z.B. mittels eines Flansches oder eines Gewindes am Meßort, z.B. auf einem Behälter, montiert ist.

Genauso kann die Kabeldurchführung an der Sonde angeordnet sein und z.B. mit der Sonde bzw. einem Sondengehäuse verbunden sein und sicherstellen, daß kein Füllgut in die Sonde eindringt.

Zwar ist aus der Druckschrift DE 23 34 398-A1 eine Kabeldurchführung durch eine Wandöffnung bekannt, die so ausgelegt ist, dass sie unbefugtes Öffnen der Kabeldurchführeinrichtung wirksam verhindern soll. Bei Verwendungen einer Kabeldurchführung an einer Messgerätesonde kommt es jedoch mehr auf deren Dichtigkeit an.

Es ist eine Aufgabe der Erfindung eine Kabeldurchführung für eine Sonde anzugeben, die dicht und möglichst klein, einfach und kostengünstig ist.

Hierzu besteht die Erfindung in einer Kabeldurchführung für eine Sonde mit
- einem Kabel,
- einem Gehäuse,
   -- durch das das Kabel hindurch geführt ist, und
   -- das ein erstes Teil und ein zweites Teil aufweist,
   -- wobei das erste Teil einen sich nach innen erstreckenden Absatz aufweist und
   -- das zweite Teil auf das erste Teil aufgeschraubt ist,
- einer ersten Hülse,
   -- die das Kabel umgreift, und
   -- wobei die ersten Hülse durch den Absatz im Gehäuse gehalten wird und abdichtend an dem Kabel anliegt und
- einer zweiten Hülse,
   -- die im Inneren des Gehäuses angeordnet ist,
   -- die einen ersten zylindrischen Abschnitt aufweist, der das Kabel eng umgreift,
   -- die einen an ein absatz-zugewandtes Ende des ersten Abschnitts angrenzenden zweiten Abschnitt aufweist,
- einem Befestigungselement,
   - das ein sich radial nach innen erstreckender im Inneren des zweiten Teils des Gehäuses angeordneter Absatz ist,
   -- der an der zweiten Hülse anliegt, und
   - der durch das Aufschrauben des zweiten Teils des Gehäuses auf das erste Teil die zweite Hülse in absatz-zugewandter Richtung preßt,
   wobei die erste Hülse (11) durch eine Feder (27) belastet wird, die im Inneren des Gehäuses (1) zwischen der ersten und der zweiten Hülse (11, 17) angeordnet ist.

Ein Vorteil der Erfindung besteht darin, daß die Kabeldurchführung sehr wenige und in ihren Abmessungen kleine Bauteile aufweist.

Ein weiterer Vorteil besteht darin, daß bei der erfindungsgemäßen Kabeldurchführung nicht nur eine Zugentlastung für das Kabel besteht, sondern gleichzeitig auch die Abschirmung über das Gehäuse an Masse oder an ein Bezugspotential angeschlossen ist.

Die Erfindung und deren Vorteile werden nun anhand der Figuren der Zeichnung, in denen vier Ausführungsbeispiele dargestellt sind, näher erläutert; gleiche Elemente sind in den Figuren mit denselben Bezugszeichen versehen.
- Fig. 1 zeigt: eine schematische Darstellung einer Kabeldurchführung mit einer mit einem Kabel verschweißten ersten Hülse, bei dem zwischen dem Gehäuse und der ersten Hülse eine Dichtung angeordnet ist;
- Fig. 2 zeigt: eine schematische Darstellung einer Kabeldurchführung mit einer mit einem Kabel verschweißten ersten Hülse, bei dem die Hülse abdichtend auf einer innenkante des Gehäuses anliegt;
- Fig. 3 zeigt: eine schematische Darstellung einer Kabeldurchführung mit einer ersten Hülse aus einem Elastomer, die abdichtend an dem Kabel und an dem Gehäuse anliegt; und
- Fig. 4 zeigt: eine schematische Darstellung einer Kabeldurchführung, bei der das Gehäuse zwei miteinander verschraubte Teile aufweist.

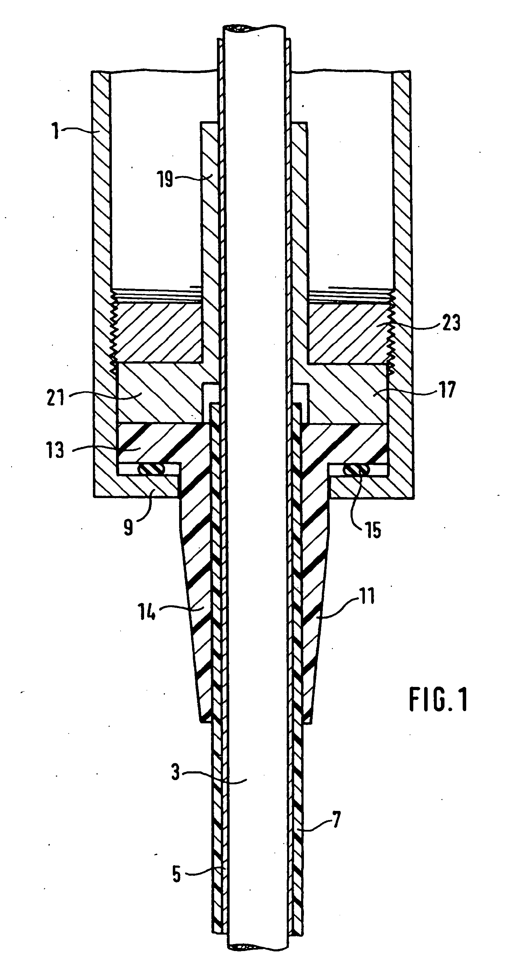

Fig. 1 zeigt eine schematische Darstellung einer Kabeldurchführung für eine Sonde. Sie weist ein im wesentlichen zylindrisches Gehäuse 1 auf, durch das ein Kabel 3 hindurch geführt ist.

Das Kabel 3 dient zur mechanischen Befestigung und zum elektrischen Anschluß einer in Fig. 1 nicht dargestellten Sonde, z.B. einer Druckmeßsonde. Im Inneren des Kabels 3 verlaufen in Fig. 1 nicht dargestellte Leitungen über die der elektrische Anschluß erfolgt. Die Leitungen sind von einer metallischen Abschirmung 5, z.B. einem Drahtgeflecht, umgeben. Die Abschirmung 5 ist mit einem Außenmantel 7 aus einem Kunststoff, z.B. aus Polyethylen (PE), überzogen.

Das Gehäuse 1 weist an einem ersten Ende einen sich radial nach innen erstreckenden Absatz auf. Bei dem in Fig. 1 dargestellten Ausführungsbeispiel ist der Absatz eine sich radial nach innen erstreckende Schulter 9.

Es ist eine erste Hülse 11 vorgesehen, die das Kabel 3 umgreift. Die Hülse 11 besteht aus einem Kunststoff. Vorzugsweise besteht sie aus dem gleichen Kunststoff wie der Außenmantel 7 des Kabels 3, also z.B. aus Polyethylen (PE).

Die Hülse 11 weist einen ersten innerhalb des Gehäuses 1 angeordneten Abschnitt 13 und einen zweiten außerhalb des Gehäuses angeordneten Abschnitt 14 auf.

Die erste Hülse 11 liegt abdichtend an dem Kabel 3 an. Bei dem in Fig. 1 dargestellten Ausführungsbeispiel ist dies dadurch gegeben, daß die Hülse 11 mit dem Außenmantel 7 des Kabels 3 verschweißt ist.

Weiter liegt zwischen dem Absatz des Gehäuses 1 und der ersten Hülse 11 eine Abdichtung vor. Diese Abdichtung ist bei dem in Fig. 1 dargestellten Ausführungsbeispiel eine auf der Schulter 9 des Gehäuses 1 aufliegende Dichtung 15, z.B. ein O-Ring, die zwischen der Schulter 9 und dem ersten Abschnitt 13 der ersten Hülse 11 eingespannt ist.

Auf einer absatz-abgewandten Seite der ersten Hülse 11 ist im Inneren des Gehäuses 1 eine zweite Hülse 17 angeordnet. Die zweite Hülse 17 besteht aus einem Metall, z.B. einem Edelstahl. Sie weist einen ersten zylindrischen Abschnitt 19 auf, der das Kabel 3 eng umgreift. Weiter weist sie einen an ein absatzzugewandtes Ende des ersten Abschnitts 19 angrenzenden zweiten Abschnitt 21 auf, der auf dem ersten Abschnitt 13 der ersten Hülse 11 aufliegt.

Der Außenmantel 7 des Kabels 3 ist auf einer absatz-abgewandten Seite der ersten Hülse 11 entfernt und die zweite Hülse 17 ist auf die freigelegte metallische Abschirmung 5 aufgeschoben. Die zweite Hülse 17 ist zur Zugentlastung des Kabels 3 mit dem Kabel 3 verpreßt.

Vorzugsweise bildet die zweite Hülse 17 eine elektrisch leitende Verbindung zwischen dem Gehäuse 1 und der metallischen Abschirmung 5. Hierzu ist der zweite Abschnitt 21 der zweiten Hülse 17 so geformt, daß er das Gehäuse 1 berührt und hierdurch eine elektrisch leitende Verbindung herstellt. Bei dem in Fig. 1 dargestellten Ausführungsbeispiel weist der zweite Abschnitt 21 der zweiten Hülse 17 einen Außendurchmesser auf, der gleich einem Innendurchmesses des Gehäuses 1 ist. Die leitende Verbindung zu dem Kabel 3 ist durch das Verpressen der metallischen zweiten Hülse 17 auf der metallischen Abschirmung 5 gegeben. Durch diese elektrische Verbindung ist gewährleistet, daß die metallische Abschirmung 5 zum Schutz der darin verlaufenden Leitungen vor eletromagnetischen Störungen auf dem gleichen Potential liegt wie das Gehäuse 1. Dies kann z.B. Masse oder ein festes Bezugspotential sein.

In dem Gehäuse 1 ist ein Befestigungselement vorgesehen, durch das die zweite Hülse 17 gegen die erste Hülse 11 gepreßt ist. In dem in Fig. 1 dargestellten Ausführungsbeispiel ist das Befestigungselement ein Gewindering 23, der in das Gehäuse 1 in absatz-zugewandter Richtung eingeschraubt ist. Der Gewindering 23 umgreift den ersten Abschnitt 19 der zweiten Hülse 17 und liegt mit einer ringscheibenförmigen Stirnfläche auf dem zweiten Abschnitt 21 der zweiten Hülse 17 auf. Durch den Gewindering 23 ist die zweite Hülse 17 gegen die erste Hülse 13 gepreßt. Hierdurch wird die erste Hülse 13 wiederum gegen die Schulter 9 des Gehäuses 1 gepreßt und bewirkt so eine Einspannung der Dichtung 15 derart, daß diese deren Dichtwirkung entfaltet.

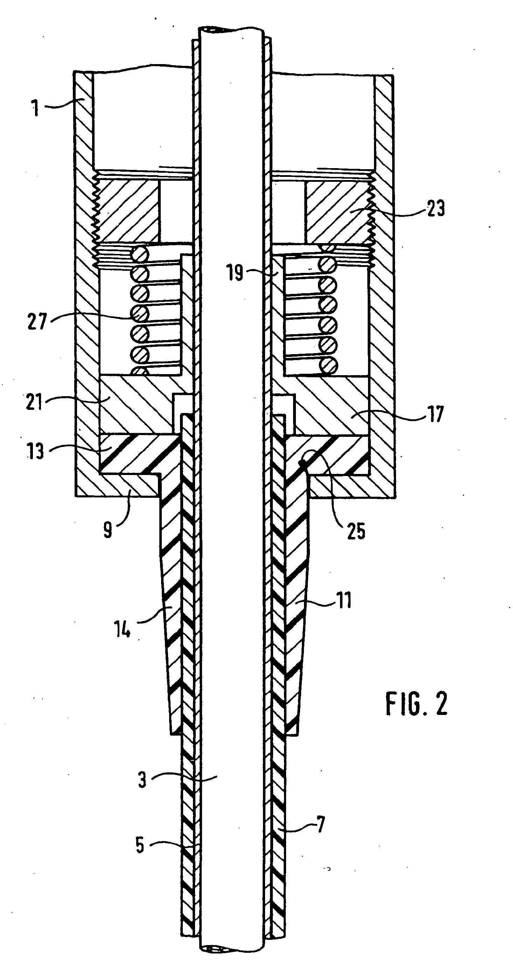

Fig. 2 zeigt ein weiteres Ausführungsbeispiel einer Kabeldurchführung. Aufgrund der großen Übereinstimmung mit dem zuvor beschriebenen Ausführungsbeispiel werden nachfolgend lediglich die bestehenden Unterschiede näher erläutert.

Der Absatz des Gehäuses 1 ist auch in dem in Fig. 2 dargestellten Ausführungsbeispiel eine sich radial nach innen erstreckende Schulter 9. Die Abdichtung zwischen dem Gehäuse 1 und der ersten Hülse 11 erfolgt jedoch nicht durch eine zwischen der Schulter 9 und dem ersten Abschnitt 13 der ersten Hülse 11 eingespannte Dichtung, sondern durch eine Innenkante 25 der Schulter 9 auf die der erste Abschnitt 13 der ersten Hülse 11 durch den Gewindering 23 gepreßt ist.

Vorzugsweise ist durch das Befestigungselement eine Feder 27 eingespannt, die auf die erste Hülse 17 eine Kraft in absatz-zugewandter Richtung ausübt. In den in Fig. 2 dargestellten Ausführungsbeispiel ist die Feder 27 zwischen dem Gewindering 23 und der zweiten Hülse 17 eingespannt. Die Feder 27 bewirkt, daß eine durch den Gewindering 23 auf die erste Hülse 11 einwirkende Kraft, die für die Abdichtung erforderlich ist auch dann relativ konstant und ausreichend groß ist, wenn die Kabeidurchführung großen Temperaturschankungen ausgesetzt ist, die zu unterschiedlichen thermischen Ausdehnungen der einzelnen Bauelemente der Kabeldurchführung führen.

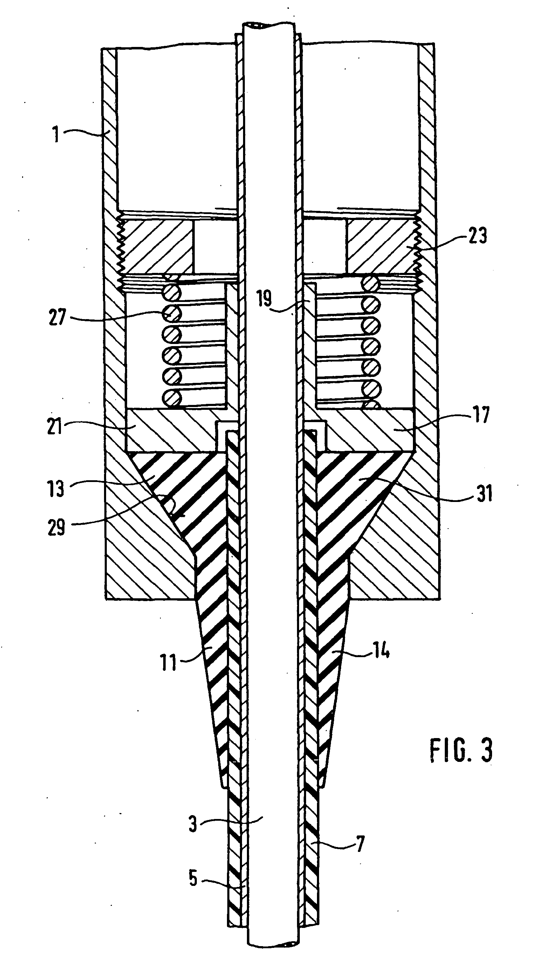

Fig. 3 zeigt ein weiteres Ausführungsbeispiel einer Kabeldurchführung. Aufgrund der großen Übereinstimmung mit den zuvor beschriebenen Ausführungsbeispielen werden auch hier nachfolgend lediglich die bestehenden Unterschiede näher erläutert.

Bei dem in Fig. 3 dargestellten Ausführungsbeispiel weist der Absatz des Gehäuses 1 eine konische innere Mantelfläche 29 auf, deren Durchmesser in Richtung des ersten Endes des Gehäuses 1 abnimmt. Die erste Hülse 11 besteht aus einem Elastomer, z.B. aus einem Gummi, und der erste Abschnitt 13 der ersten Hülse 11 weist einen zu der konischen inneren Mantelfläche 29 des Gehäuses 1 formgleichen konischen Bereich 31 auf. Die erste Hülse 11 ist durch den Gewindering 23 derart gegen den Absatz des Gehäuses 1 gepreßt, daß der konische Bereich 31 der Hülse 11 in die konische Mantelfläche 29 des Gehäuses 1 hinein gedrückt wird und die erste Hülse 11 abdichtend an dem Gehäuse 1 und an dem Kabel 3 anliegt.

Auch hier ist zwischen dem Gewindering 23 und der zweiten Hülse 17 eine Feder 27 vorgesehen, die dafür sorgt, daß auch bei unterschiedlicher thermischer Ausdehnung der einzelnen Bauelemente der Kabeldurchführung immer eine ausreichende Kraft in absatz-zugewandter Richtung auf die erste Hülse 11 ausgeübt wird, um die Abdichtungen zwischen der Hülse 11 und dem Kabel 3 und zwischen der Hülse 11 und dem Gehäuse 1 zu gewährleisten.

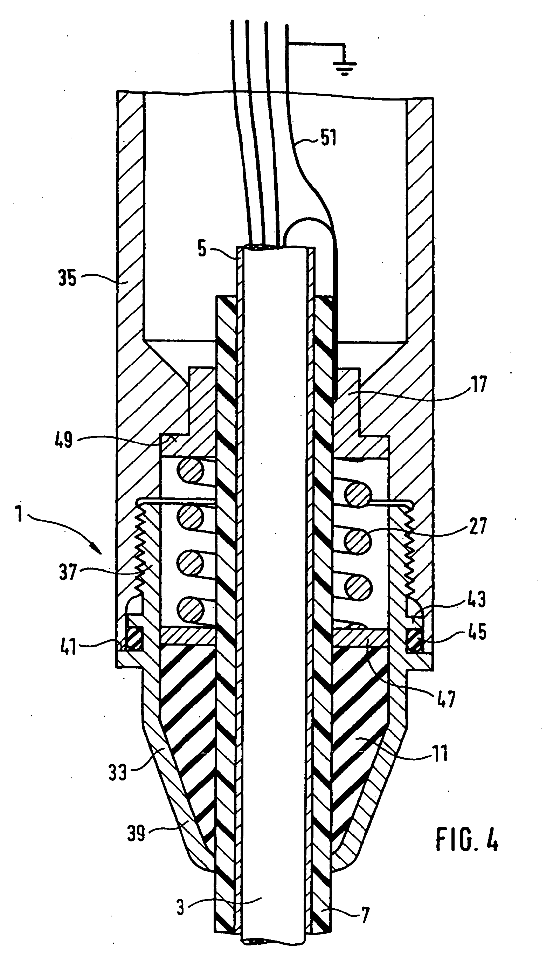

Fig. 4 zeigt ein Ausführungsbeispiel einer erfindungsgemäßen Kabeldurchführung. Aufgrund der großen Übereinstimmung mit dem zuvor beschriebenen Ausführungsbeispiel werden auch hier nachfolgend lediglich die bestehenden Unterschiede näher erläutert.

Bei dem in Fig. 4 dargestellten Ausführungsbeispiel weist das Gehäuse 1 ein erstes das erste Ende umfassendes Teil 33 und ein zweites Teil 35 auf. Das erste Teil 33 weist einen zylindrischen Abschnitt 37 und einen daran anschließenden sich in Richtung des ersten Endes des Gehäuses 1 auf den Außendurchmessers des Kabels 3 verjüngenden konischen Abschnitt 39 auf. Der konische Abschnitt 39 bildet den Absatz des Gehäuses 1, durch den die erste Hülse 11 im Inneren des Gehäuses 1 gehalten wird. Die erste Hülse 11 ist vollständig innerhalb des konischen Abschnitts 39 angeordnet. Sie besteht auch hier aus einem Elastomer, z.B. aus Gummi, und liegt abdichtend an dem Gehäuse 1 und dem Kabel 3 an.

Hierzu umgreift die erste Hülse 11 das Kabel 3 eng und weist einen außen zylindrischen absatz-abgewandten Bereich und einen absatz-zugewandten außen konischen sich in absatz-zugewandter Richtung auf den Außendurchmesser des Kabels 3 verjüngenden Bereich auf.

Das zweite Teil 35 des Gehäuses 1 ist in absatz-zugewandter Richtung auf das erste Teil 33 aufgeschraubt. Hierzu ist auf dem zylindrischen Abschnitt 37 ein Außengewinde vorgesehen. In absatz-zugewandter Richtung unterhalb des Außengewindes ist ein sich radial nach außen erstreckender Anschlag 41 vorgesehen gegen den das zweite Teil 35 geschraubt ist.

In absatz-abgewandter Richtung oberhalb des Anschlags 41 ist eine sich innerhalb des zweiten Teils 35 radial nach außen erstreckende Schulter 43 vorgesehen, die zusammen mit dem Anschlag 41 eine Nut zur Aufnahme einer Dichtung 45 bildet. Die Dichtung 45 sorgt für eine Abdichtung eines zwischen den beiden Gehäuseteilen bestehenden ringzylindrischen Spaltes.

Im Inneren des Gehäuses 1 ist zwischen der ersten und der zweiten Hülse 11, 17 eine Feder 27 angeordnet. Die Feder 27 liegt auf einer auf der ersten Hülse 11 aufliegenden Scheibe 47 auf. Die Scheibe 47 bietet den Vorteil, daß eine von der eingespannten Feder 27 ausgeübte Kraft in absatz-zugewandter Richtung gleichmäßig auf die Hülse 11 übertragen wird.

Die zur Einspannung der Feder 27 erforderliche Kraft wird durch das Befestigungselement aufgebracht. Bei dem in Fig. 4 dargestellten Ausführungsbeispiel ist das Befestigungselement ein sich radial nach innen erstreckender im Inneren des zweiten Teils 35 angeordneter Absatz 49, der auf der zweiten Hülse 17 aufliegt. Durch das Aufschrauben des zweiten Teils 35 auf den ersten Teil 33 preßt der Absatz 49 die zweite Hülse 17 in absatz-zugewandter Richtung.

Bei dem in Fig. 4 dargestellten Ausführungsbeispiel ist die metallische Abschirmung 5 kein stabiles metallisches Drahtgeflecht sondern eine dünne metallische Folie. Die zweite Hülse 17 ist außen auf den Außenmantel 7 des Kabels 3 aufgeschoben und mit dem Kabel 3 verpreßt. Auf einer absatz-abgewandten Seite der zweiten Hülse 17 ist der Außenmantel 7 entfernt und die Leitungen sind freigelegt. Eine mit der metallischen Folie elektrisch leitend verbundene Beilauflitze 51 weist ein blankes Leitungselement auf, das zwischen dem Außenmantel 7 des Kabels 3 und der zweiten Hülse 17 eingeklemmt ist. Es besteht somit, wie auch bei den zuvor beschriebenen Ausführungsbeispielen, durch die zweite Hülse 17 eine elektrisch leitende Verbindung zwischen dem Gehäuse 1 und der metallischen Abschirmung 5. Das Unterlegen einer Beilauflitze zwischen dem Außenmantel 7 und der zweiten Hülse 17 kann selbstverständlich auch bei den zuvor beschriebenen Ausführungsbeispielen zur Herstellung der gewünschten elektrischen Verbindung eingesetzt werden.

## Patentansprüche

1. Kabeldurchführung für eine Sonde mit
- einem Kabel (3),
- einem Gehäuse (1),
-- durch das das Kabel (3) hindurch geführt ist, und
- das ein erstes Teil (33) und ein zweites Teil (35) aufweist,
-- wobei das erste Teil (33) einen sich nach innen erstreckenden Absatz (39) aufweist und
-- das zweite Teil (35) auf das erste Teil (33) aufgeschraubt ist,
- einer ersten Hülse (11),
-- die das Kabel (3) umgreift, und
-- wobei die ersten Hülse (11) durch den Absatz (39) im Gehäuse (1) gehalten wird und abdichtend an dem Kabel (3) anliegt und
- einer zweiten Hülse (17),
- die im Inneren des Gehäuses (1) angeordnet ist,
-- die einen ersten zylindrischen Abschnitt aufweist, der das Kabel (3) eng umgreift,
-- die einen an ein absatz-zugewandtes Ende des ersten Abschnitts angrenzenden zweiten Abschnitt aufweist,
- einem Befestigungselement,
-- das ein sich radial nach innen erstreckender im Inneren des zweiten Teils (35) des Gehäuses (1) angeordneter Absatz (49) ist,
-- der an der zweiten Hülse (17) anliegt, und
-- der durch das Aufschrauben des zweiten Teils (35) des Gehäuses (1) auf das erste Teil (33) die zweite Hülse (17) in absatz-zugewandter Richtung preßt,
**dadurch gekennzeichnet,**
**dass** die erste Hülse (11) durch eine Feder (27) belastet wird, die im Inneren des Gehäuses (1) zwischen der ersten und der zweiten Hülse (11, 17) angeordnet ist.

## Claims

1. Cable gland for a probe with
- a cable (3)
- a housing (1)
-- through which the cable (3) is guided, and
-- that has a first part (33) and a second part (35)
-- where the first part (33) has a shoulder (39) that extends inwards and
-- the second part (35) is screwed onto the first part (33)
- a first sleeve (11)
-- which surrounds the cable (3) and
-- where the first sleeve (11) is held by the shoulder (39) in the housing (1) and rests on the cable (3) in a way that forms a seal
- a second sleeve (17)
-- which is arranged inside the housing (1)
-- which has a first cylindrical section that tightly surrounds the cable (3)
-- which has a second section which is adjacent to a shoulder-facing end of the first section
- a securing element
-- which is a shoulder (49) which extends radially inwards and is arranged inside the second section (35) of the housing (1)
-- which rests on the second sleeve (17) and
-- which presses the second sleeve (17) in the direction facing towards the shoulder when the second part (35) of the housing (1) is screwed onto the first part (33),
**characterized in that**
the first sleeve (11) is loaded by a spring (27) which is arranged inside the housing (1) between the first and second sleeve (11, 17).

## Revendications

1. Passe-câble pour une sonde avec
- un câble (3),
- un boîtier (1),
-- à travers lequel le câble (3) est acheminé, et
-- qui présente une première partie (33) et une deuxième partie (35),
-- la première partie (33) présentant un épaulement (39) s'étendant vers l'intérieur, et
-- la deuxième partie (35) étant vissée sur la première partie (33),
- une première douille (11),
-- qui entoure le câble (3), et
-- la première douille (11) étant maintenue par l'épaulement (39) dans le boîtier (1) et reposant de façon étanche contre le câble (3), et
- une deuxième douille (17),
-- qui est disposée à l'intérieur du boîtier (1),
-- qui présente une première section cylindrique, qui entoure étroitement le câble (3),
-- qui présente une deuxième section avoisinant une extrémité située côté épaulement de la première section,
- un élément de fixation,
-- qui est un épaulement (49) disposé à l'intérieur de la deuxième partie (35) du boîtier (1), s'étendant radialement vers l'intérieur,
-- qui repose contre la deuxième douille (17), et
-- qui presse la deuxième douille (17) en direction opposée à l'épaulement par le vissage de la deuxième partie (35) du boîtier (1) sur la première partie (33),
**caractérisé en ce**
**que** la première douille (11) est chargée par un ressort (27), qui est disposé à l'intérieur du boîtier (1), entre la première et la deuxième douille (11, 17).
